(19) Europäisches Patentamt

European Patent Office

Office européen des brevets

(11) Veröffentlichungsnummer : **0 097 886**
**B1**

(12) **EUROPÄISCHE PATENTSCHRIFT**

(45) Veröffentlichungstag der Patentschrift :
03.12.86

(21) Anmeldenummer : 83105912.6

(22) Anmeldetag : 16.06.83

(51) Int. Cl.⁴ : **G 02 B 26/02, G 02 B   6/26**

(54) **Einstellbares optisches Dämpfungsglied.**

(30) Priorität : 26.06.82 DE 3223898

(43) Veröffentlichungstag der Anmeldung :
11.01.84 Patentblatt 84/02

(45) Bekanntmachung des Hinweises auf die Patenterteilung : 03.12.86 Patentblatt 86/49

(84) Benannte Vertragsstaaten :
DE FR GB

(56) Entgegenhaltungen :
EP-A- 0 006 662
DE-A- 2 914 262
DE-U- 1 702 835
Patent Abstracts of Japan Band 6, Nr. 46, 24. März
1982
Patent Abstracts of Japan Band 6, Nr. 75, 12. Mai 1982
Patent Abstracts of Japan Band 6, Nr. 75, 12. Mai 1982
RICHTER-VOSS "Bauelemente der Feinmechanik",
1952, VERLAG TECHNIK, Berlin
Prospekt der Firma Nippon Electric, Co Ltd., über
"Optical Attenuator OD-8500, OD-8501, OD-8550"

(73) Patentinhaber : International Standard Electric Corporation
320 Park Avenue
New York New York 10022 (US)
FR GB
Standard Elektrik Lorenz Aktiengesellschaft
Hellmuth-Hirth-Strasse 42
D-7000 Stuttgart 40 (DE)
DE

(72) Erfinder : Kaiser, Manfred
Zeppelinstrasse 2
D-7251 Hemmingen (DE)
Erfinder : Stiepek, Wolfgang
Witikoweg 35
D-7000 Stuttgart 40 (DE)

(74) Vertreter : Graf, Georg Hugo, Dipl.-Ing. et al
c/o Standard Elektrik Lorenz AG Patent- und
Lizenzwesen Postfach 300 929 Kurze Strasse 8
D-7000 Stuttgart 30 (DE)

EP 0 097 886 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung bezieht sich auf ein einstellbares, optisches Dämpfungsglied gemäß dem Oberbegriff des Anspruchs 1. Ein derartiges Dämpfungsglied wird von der Firma Nippon Electric Co. unter der Bezeichnung OD 8511 hergestellt.

Der Lichtweg innerhalb dieses Dämpfungsgliedes beginnt mit einer ersten graded-index-Linse, die das von einem ersten Lichtwellenleiter kommende Licht auf ein erstes Prisma abbildet. Im Prisma erfolgt eine zweifache Strahlumlenkung. Danach gelangt das Licht auf ein Graufilter, das zusammen mit weiteren Graufiltern unterschiedlichen Dämpfungsgrades auf einer ersten Scheibe angeordnet ist, wobei durch Drehen derselben jeweils ein Graufilter in den Strahlengang gebracht werden kann. Parallel zur ersten Scheibe ist eine zweite Scheibe drehbar angeordnet, die einen Graukeil trägt, durch die eine stufenlose Einstellung der Dämpfung erfolgen kann. Über ein zweites Prisma, in dem ebenfalls eine zweifache Strahlumlenkung erfolgt, und eine zweite graded-index-Linse gelangt das Licht zu einem zweiten Lichtwellenleiter. Die Lichtwellenleiter werden durch Stecker mit dem Dämpfungsglied verbunden.

Dieser Aufbau hat zur Folge, daß durch Abbildungsfehler, Fehljustierung und Temperatureinflüsse auf die Justierung eine zusätzliche, unkontrollierbare Dämpfung des Lichtes erfolgt. Es ist daher lediglich als Meßhilfe durch Dämpfung des Lichtes um einen bestimmten, im zeitlichen Mittel konstanten Betrag geeignet, nicht jedoch für den Einbau in ein Nachrichtenübertragungssystem.

Aus der englischen Kurzfassung der JP-A-56-161 506 ist eine Anordnung bekannt, die schräg im Strahlengang stehende Dämpfungsscheiben enthält. Über den Aufbau der Dämpfungsscheiben und deren Befestigung ist nichts offenbart. Die Anordnung enthält Stablinsen, die für paralleles Licht im Strahlengang sorgen.

Der Erfindung liegt die Aufgabe zugrunde, ein einfaches und kostengünstiges optisches Dämpfungsglied der eingangs genannten Art anzugeben, dessen Dämpfung stufenweise einstellbar und das auch bei Monomode-Lichtwellenleitern verwendbar ist.

Die Lösung dieser Aufgabe erfolgt mit den im Anspruch 1 angegebenen Merkmalen. Eine Ausgestaltung kann dem Unteranspruch entnommen werden.

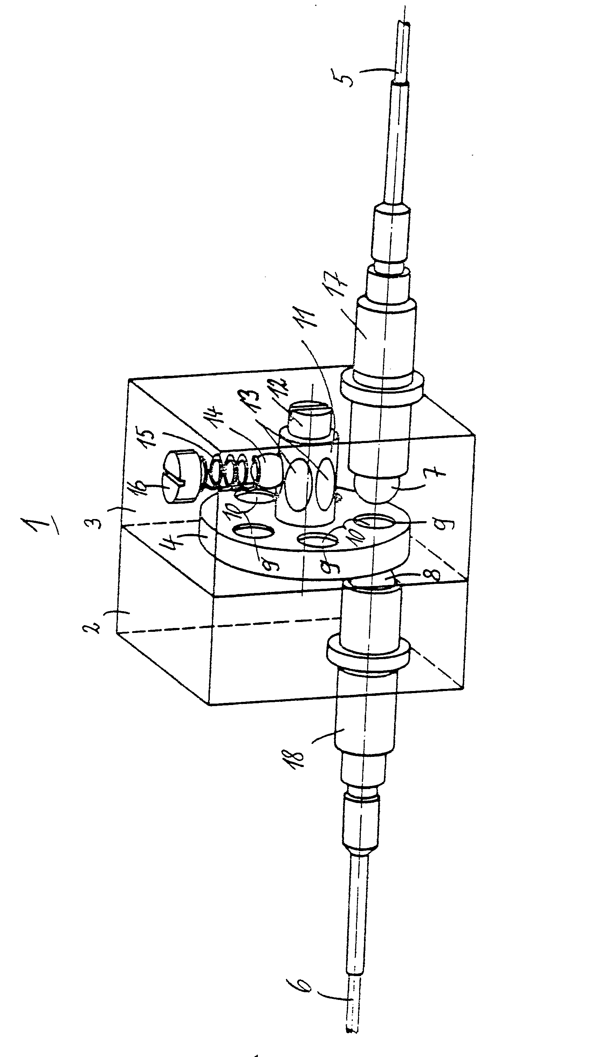

Nachstehend wird die Erfindung anhand von Zeichnungen eines Ausführungsbeispieles näher erläutert. Die einzige Figur zeigt ein optisches Dämpfungsglied in einer schematischen, perspektivischen Darstellung.

Das optische Dämpfungsglied 1 hat ein Gehäuse aus zwei Gehäuseteilen 2 und 3. Das Gehäuse ist der besseren übersicht wegen durchsichtig dargestellt. Im Gehäuseteil 3 ist eine drehbare Scheibe 4 vorhanden und an das Gehäuseteil 3 ist ein Lichtwellenleiter 5 durch eine geeignete Halterung 17 fest angeschlossen. An das Gehäuseteil 2 ist ein Lichtwellenleiter 6 durch eine geeignete Halterung 18 fest angeschlossen. Die Lichtwellenleiter 5 und 6 ragen dabei in die Gehäuseteile 3 bzw. 2 zusammen mit ihren Halterungen 17 bzw. 18 hinein für die Scheibe 4 und die Lichtwellenleiter 5 und 6 mit ihren Halterungen 17 und 18 sind in den Gehäuseteilen 2 und 3 entsprechende Ausnehmungen bzw. Bohrungen vorhanden. Die Befestigungsmittel zum Zusammenhalt der Gehäuseteile 2 und 3 miteinander sind nicht dargestellt.

Vor den Enden der Lichtwellenleiter 5 und 6 ist in den Gehäuseteilen 3 bzw. 2 je eine Kugellinse 7 bzw. 8 an den Enden der Halterungen 17 bzw. 18 angeordnet. Hierdurch wird das zum Beispiel aus dem Ende des ankommenden Lichtwellenleiters 5 austretende divergierende Licht in ein paralleles Strahlenbündel umgewandelt und dieses dann auf das Ende des abgebenden Lichtwellenleiters 6 fokussiert. Das parallele Strahlenbündel im Raum zwischen den Kugellinsen 7 und 8 ist in seinem Verlauf nicht dargestellt.

Die Scheibe 4 weist in ihrem bei einer Drehung durch das parallele Strahlenbündel verlaufenden Teil beispielsweise sechs Bereiche 9 auf, in denen Graufilter 10 unterschiedlicher Dämpfung eingesetzt sind. Hierzu ist die Scheibe 4 in den Bereichen 9 durchbrochen, so daß die Graufilter beispielsweise klemmend eingedrückt werden können. Es kann ein weiterer Bereich 9 (nicht gezeigt) vorhanden sein in den kein Graufilter eingesetzt ist. In dieser Stellung der Scheibe 4 wird ein ungedämpfter Lichtdurchgang erreicht. Das Durchbrechen der Bereiche 9 kann durch Bohren, Stanzen oder ein anderes Verfahren erreicht werden. Es kann auch eine im Druckgußverfahren hergestellte Scheibe, die in den Bereichen 9 Löcher aufweist, verwendet werden.

Die Graufilter weisen beispielsweise Dämpfungen von 3, 5, 7, 10, 15 und 20 dB auf. Der Bereich 9 ohne ein eingesetztes Graufilter dient als Nullstellung. Die Ebenen der Graufilter 10 sind in Bezug auf die Achse des parallelen Strahlenbündels in einem von 90° abweichenden Winkel eingesetzt, der vorzugsweise etwa 70° beträgt. Durch diese Schrägstellung der Graufilter wird erreicht, daß reflektiertes Licht das Strahlenbündel verläßt, das ansonsten als Störlicht wieder in den ankommenden Lichtwellenleiter 5 gelangen könnte.

Die Scheibe 4 weist in der Mitte einen Wellenstumpf 11 auf, dessen Ende 12 mit einem Schlitz versehen ist. Durch eine entsprechende Bohrung im Gehäuseteil 3 ist das Ende 12 mit dem Schlitz von außen zugänglich und mit Hilfe eines Schraubendrehers kann die Scheibe 4 verdreht werden. Im Wellenstumpf 11 sind so viele Vertiefungen 13 vorhanden wie Bereiche 9 in der Scheibe 4 sind. Die Vertiefungen 13 sind Teil eines Rastgesperres, das noch eine Kugel 14, eine darauf einwirkende Druckfeder 15 und eine die Federkraft der Druckfeder 15 einstellende Schraube 16 aufweist.

Die Lage der Vertiefungen 13 ist so gewählt, daß in jeder Raststellung sich ein Bereich 9 im parallelen Strahlenbündel befindet. Die Kugel 14, die Druckfeder 15 und die Schraube 16 sind im Gehäuseteil 3 in einer entsprechenden Bohrung, die teilweise für die Schraube 16 ein Gewinde aufweist, untergebracht.

### Patentansprüche

1. Einstellbares optisches Dämpfungsglied mit je einer Linse auf der Licht abgebenden und der aufnehmenden Seite, mit einer Scheibe, die mehrere Graufilter unterschiedlicher Dämpfung aufweist, von denen jeweils eines durch Drehen der Scheibe in den Strahlengang bringbar ist, und mit einem Rastgesperre, wobei an das Dämpfungsglied (1) je ein ankommender und ein abgehender Lichtwellenleiter (5, 6) anschließbar ist, dadurch gekennzeichnet, daß die Linsen Kugellinsen (7, 8) sind, die unmittelbar vor und hinter der Scheibe (4) angeordnet sind, daß sich die Graufilter (10) unter einem von 90° abweichenden Winkel im Strahlengang befinden, und daß die Scheibe (4) einen Wellenstumpf (11) aufweist, auf den das Rastgesperre (13, 14, 15) einwirkt.

2. Einstellbares optisches Dämpfungsglied nach Anspruch 1, dadurch gekennzeichnet, daß das Rastgesperre eine durch eine Druckfeder (15) in Vertiefungen (13) des Wellenstumpfes (11) gedrückte Kugel (14) aufweist.

### Claims

1. A variable optical attenuator with a lens at the input end and a lens at the output end, with a disk containing several neutral density filters of different attenuation, one of which at a time can be brought into the beam path by rotation of the disk, and with a locking mechanism, characterized in that the lenses are spherical lenses (7, 8) which are arranged immediately in front of and behind the disk (4), that the neutral density filters (10) are in the beam path and make an angle other than 90° with it, that the disk (4) has a stub shaft (11) upon which the locking mechanism (13, 14, 15) acts, and that an incoming optical waveguide and an outgoing optical waveguide (5, 6) are connectable to the attenuator (1).

2. A variable optical attenuator as claimed in Claim 1, characterized in that the locking mechanism includes a ball (14) forced by a compression spring (15) into depressed seats (13) of the stub shaft (11).

### Revendications

1. Atténuateur optique variable comprenant une lentille du côté entrée et une lentille du côté sortie de la lumière, un disque portant plusieurs filtres gris d'atténuations différentes, chacun d'eux pouvant être amené dans le trajet des rayons lumineux par rotation du disque, ainsi qu'un mécanisme de positionnement, caractérisé en ce que les lentilles sont des lentilles sphériques, disposées immédiatement avant et immédiatement après le disque (4), les filtres gris (10) se trouvent orientés sous un angle différent de 90° dans le trajet des rayons lumineux, le disque (4) comporte un arbre (11) sur lequel agit le mécanisme de positionnement (13, 14, 15), et l'atténuateur (1) peut être respectivement couplé à des guides d'onde optique d'entrée et de sortie (5, 6).

2. Atténuateur optique variable selon la revendication 1, caractérisé en ce que le mécanisme de positionnement comprend une bille (14) poussée par un ressort de compression (15) dans des cavités (13) de l'arbre (11).